# EUROPEAN PATENT SPECIFICATION

(11) **EP 3 805 116 B1**
(45) Date of publication and mention of the grant of the patent: **19.07.2023**
(21) Application number: 20198120.6
(22) Date of filing: 24.09.2020
(51) Int. Cl.: B65D 1/02, B65D 8/00, B65D 25/42

(54) **CONTAINER FOR PACKAGING**
BEHÄLTER FÜR VERPACKUNGEN
RÉCIPIENT D'EMBALLAGE

(30) Priority: 08.10.2019 IT 201900018173
(43) Date of publication of application: 14.04.2021
(73) Proprietor: Societa' per Azioni Curti - Costruzioni Meccaniche, 48014 Castel Bolognese (RA) (IT)
(72) Inventor: BASSETTI, Fabio, 48018 Faenza (RA) (IT)
(74) Representative: Corradini, Corrado

(56) References cited:
- EP-A1- 2 810 896
- JP-A- 2002 240 167
- US-A- 2 069 033
- US-A1- 2010 252 617
- US-A1- 2013 020 277

## Description

### TECHNICAL FIELD

The present invention relates to a container for packaging solid and/or liquid products, for example products in the chemical, food or other fields.

### PRIOR ART

In the packaging industry it is known to package liquid and/or solid products inside containers such as cans, bottles, vials etc., which however sometimes have the drawback of being difficult to dispose of and therefore of having a high environmental impact.

To overcome this drawback, in the patent ITRE2014A000045, on behalf of the same Applicant, a container for packaging products has been described which is made of a paper-based material.

This container generally has the shape of a glass which defines a housing volume for the product to be packaged and is provided with an upper access mouth.

However, this upper access mouth is of rather large dimensions, hence the need to provide a closure system that allows the product to be effectively preserved during storage and marketing phase. Another container is known from US02013020277.

This closure system can comprise, for example, a film or a flat lid made of waterproof material, for example aluminium or plastic, which is applied to the upper mouth of the glass-shaped body, from where it can be subsequently removed by end users to access to the product contained inside.

However, after the total or partial removal of the film or the lid, it is generally inconvenient to pour the product outside the glass-shaped body in a precise and controlled way, as the width of the upper mouth brings the users to have to pay close attention so that there are no excessive spills and/or waste of the product.

An object of the present invention is therefore to make available a container with a low environmental impact but which, after opening, allows the end users to obtain a comfortable, regular and fluid dispensing of the packaged product.

A further aim of the present invention is that of reaching the aforesaid objective within the context of a simple, rational and relatively cheap solution.

Such purposes are accomplished by the characteristics of the invention indicated in the independent claim.

The dependent claims outline preferred and/or particularly advantageous aspects of the invention.

### DISCLOSURE OF THE INVENTION

In particular, an embodiment of the invention makes available a container for packaging a product according to claim 1.

Thanks to this solution, the invention makes available a container with a reduced environmental impact, since both the glass-shaped body and the containment body that closes the upper mouth are made of paper-based material.

Furthermore, thanks to the concave shape of the containment body, the latter defines a sort of funnel or bottle neck capable of effectively conveying the packaged product towards the outlet hole which, having a smaller passage section than that of the upper opening of the glass-shaped body, allows a more comfortable and easily controllable dispensing of the product itself.

In practice, the present invention makes available a container having overall the same ease of use as the usual glass or plastic bottles but which is essentially made of a paper-based material and, therefore, with a reduced environmental impact.

According to an aspect of the present invention, the containment body can have a substantially axisymmetric shape (i.e. of a solid of revolution), for example truncated-cone or rounded.

These shapes have the advantage that they can be made relatively simply and economically.

In this regard, a preferred aspect of the invention provides that the containment body can be obtained by plastic deformation, for example by a process of thermoforming, molding or drawing, of a plane disc of the paper-based material.

Thanks to this solution, the containment body can be made in a simple and economical way, for example by means of automatic machines with high productivity.

Another aspect of the invention provides that the container can further comprise a collar which defines the upper opening of the glass-shaped body and which makes available the top edge thereof.

This collar has the effect of giving the container greater rigidity in the immediate vicinity of the upper opening of the glass-shaped body, providing a valid support to the containment body and reducing the risk that the container can bend or crumple during storage and marketing and/or during use.

A further aspect of the invention provides that the collar can be obtained by means of folding an upper strip of the glass-shaped body on itself.

Thanks to this solution, the glass-shaped body and the collar can be obtained as a single body, minimizing production costs.

At the same time, this allows making available a glass-shaped body provided with a reinforcing and stiffening collar, in which the collar is also made of a material with a reduced environmental impact.

Alternatively, the collar could be made as a separate body in plastic material, preferably bioplastic, which can be rigidly fixed to the glass-shaped body, for example welded.

A different aspect of the invention provides that the glass-shaped body and the containment body can be made of a paper-based laminated material.

This type of material has the effect of guaranteeing at the same time a low environmental impact and optimal mechanical-physical properties, such as structural rigidity and resistance to humidity, which make the container suitable to be used for packaging various types of products.

A further aspect of the invention provides in particular that the glass-shaped body and the containment body can be made of a composite material comprising polythene and paper fibres.

Thanks to this solution, the glass-shaped body and the containment body are made of a material which guarantees them considerable mechanical and thermal resistance and, at the same time, which can be easily deformed to obtain the desired shape.

According to an embodiment of the invention, the container can further comprise a tab welded to the containment body so as to close the outlet hole, which is provided with at least a removable portion for opening the outlet hole thereof.

Thanks to this solution, the container can be completely leak-proof during storage and marketing phases thanks to the tab that closes (in a leak-proof manner) the outlet hole of the containment body, and which when necessary can be easily opened by the user simply by eliminating said removable portion of the tab.

A preferred embodiment of the invention however provides that the containment body can comprise a dispensing spout associated with the outlet hole.

Thanks to this solution, the user is provided with a container whose dispensing is particularly regular and fluid, allowing obviating unnecessary waste of product.

Another aspect of the invention provides that the container may comprise a removable cap adapted to be coupled, for example by screwing, to said dispensing spout to close the outlet hole.

Thanks to this solution, the container is provided with a cap which, if necessary, can be coupled and uncoupled to/from the dispensing spout of the containment body, so as to be able to close and reopen the outlet hole several times, always guaranteeing the correct preservation of the product.

According to the present invention, the glass-shaped body of the container comprises a side wall having at least a portion of prismatic shape, i.e. having the shape of a right prism such as a rectangular parallelepiped. Thanks to this, the container can assume a substantially squared shape which allows it to be grasped in a more stable and safe way by the users.

Furthermore, this squared shape means that several containers can be placed side by side to form compact bundles, easier to handle and less bulky to store.

### BRIEF DESCRIPTION OF THE DRAWINGS

Further features and advantages of the invention will be more apparent after reading the following description provided by way of non-limiting example, with the aid of the figures illustrated in the accompanying drawings.
Figure 1 is an exploded view in perspective elevation of a container according to a first embodiment of the invention.
Figure 2 is an exploded view in perspective elevation of a container according to an alternative embodiment of the invention.
Figure 3 is an exploded view in perspective elevation of a container according to another embodiment of the invention.
Figure 4 is an exploded view in perspective elevation of a container according to a fourth embodiment of the invention.

### BEST MODE OF THE INVENTION

With particular reference to the aforementioned figures, the numeral 10 globally indicates a container for packaging products, which is particularly versatile as it can be used for a wide range of solid and liquid products, for example food or pharmaceutical or other types of products.

The container 10 first of all comprises a glass-shaped body 15, internally hollow, which defines an accommodation volume inside which the product can be contained.

The glass-shaped body 15 is closed at the bottom by a bottom wall 20, delimited on the perimeter by a side wall 25 which defines all the side faces of the glass-shaped body 15, and is provided with an upper opening 30, which is in an opposed position with respect to the bottom wall 20 and is delimited on the perimeter by a top edge 35 of a substantially circular shape.

The bottom wall 20 is substantially plane and is shaped so as to be able to act as a stable support for the glass-shaped body 15.

In other words, the glass-shaped body 15 can be arranged substantially upright (stable) standing through the bottom wall 20 on a support surface.

Preferably, the glass-shaped body 15 is made as an integral body, i.e. the side wall 25 and the bottom wall 20 can be made as a single body.

The glass-shaped body 15 is made of a paper-based material, for example it can be made of a composite material based on paper fibres. Preferably, the glass-shaped body 15 is made of a laminated material comprising paper fibres and polythene which, thanks to its anti-adhesion properties, is particularly suitable for use for packaging products.

As can be seen in the figures, the side wall 25 of the glass-shaped body 15 has a cylindrical portion 40 which defines the upper opening 30 and the relative circular top edge 35.

The side wall has a prismatic shaped portion 50, having the shape of a right prism, for example a rectangular parallelepiped, whose axis is parallel (typically coincident) with the axis of the cylindrical portion 40 and therefore of the upper opening 30 defined by it.

In this way, the prismatic portion 50 comprises a plurality of plane faces, preferably rectangular and parallel to the axis of the cylindrical portion 40, which are mutually connected by as many corners.

The corners can possibly be chamfered, in order to allow a more ergonomic grip of the glass-shaped body 15.

The prismatic portion 50 has a greater transverse extension than the cylindrical portion 40, to which it can be connected by means of a connecting stretch 52 of the side wall 25, for example of a chamfered or rounded shape.

The side wall 25 can also comprise a second connecting stretch 54, for example of a chamfered or rounded shape, which is adapted to connect the prismatic portion 50 with the bottom wall 20.

The bottom wall 20 has a smaller transverse extension than the prismatic portion 50 and can have a polygonal shape, for example the same polygonal shape (but different dimensions) as the cross section of the prismatic portion 50.

Although not visible from the figures, the bottom wall 20 can be flat or, more preferably, it could be shaped (e.g. rounded) so as to define a recess towards the inside of the glass-shaped body 15.

This recess has the effect that the glass-shaped body 15 will rest only on the perimeter edge of the bottom wall 20, thus resulting much more stable and safe.

The container 10 can further comprise a collar 45, which is substantially defined by an annular body which defines the upper opening 30 of the glass-shaped body 15.

In particular, the collar 45 is associated with the cylindrical portion 40 of the side wall 25 of the glass-shaped body 15 and makes available the top edge 35 which delimits the upper opening 30 of the glass-shaped body 15 itself.

The collar 45 is substantially rigid, i.e. it defines a portion of increased rigidity of the glass-shaped body 15.

In detail, the collar 45 defines a shoulder which derives radially (externally as illustrated or, alternatively, internally) from the cylindrical portion 40 of the side wall 25 and which makes available the top edge 35 of the glass-shaped body 15.

In one embodiment, the collar 45 can be made as an integral body with the glass-shaped body 15.

In other words, the bottom wall 20, the side wall 25 and the collar 45 can be obtained as a single piece by the same process for processing the paper-based material.

In this case, the collar 45 is therefore made of the same material of which the glass-shaped body 15 is made, for example in a laminated material based on polythene and paper fibres.

In this embodiment, the collar 45 can be obtained by means of folding an upper strip of the side wall 25 of the glass-shaped body 15 on itself, in this case of the end of the cylindrical portion 40 at which the top edge is defined 35.

The collar 45 can be obtained by means of a single folding of said upper strip of the side wall 25 or by means of a plurality of successive folding thereof.

In practice, the upper strip of the side wall 25 is folded on itself in order to obtain a flap, so that a portion of the strip descends along the side wall 25 itself in the direction approaching the bottom wall 20, creating a double shaped layer.

In an alternative embodiment (not illustrated), the collar 45 can be made as a separate and distinct body from the glass-shaped body 15.

In this alternative embodiment, the collar 45 is fixed to the glass-shaped body 15, for example welded or glued thereto.

In this variant, the collar 45 is preferably made of plastic material, preferably of a bioplastic material.

In other words, the collar 45 can be substantially defined by a plastic ring which is coaxially and rigidly fixed to the side wall 25 of the glass-shaped body 15, in this case to the cylindrical portion 40 at the upper opening 30, so as to completely surround it on the perimeter.

Said plastic ring can be inserted inside or outside the glass-shaped body 15, substantially flush with the upper end of the side wall 25 distal from the bottom wall 20.

Apart from these considerations, the container 10 also comprises a containment body 55 fixed, for example welded or glued, to the top edge 35 of the glass-shaped body 15 and adapted to close the upper opening 30 of the glass-shaped body 15.

An outlet hole 60 is made in the containment body 55 through which the product contained within the accommodation volume defined by the glass-shaped body 15 is dispensed. The containment body 55 is made of a paper-based material, for example it can be made of a composite material based on paper fibres.

Preferably, the containment body 55 is made of the same material with which the glass-shaped body 15 is made, that is, it is made of a laminated material comprising polythene and paper fibres.

The containment body 55 has a concave shape, for example like the one of a bowl, a cup or a bell, having a concavity directed towards the accommodation volume of the glass-shaped body 15 and tapered (i.e. narrowing) from the top edge 35 towards the outlet hole 60.

In detail, the containment body 55 is provided with a circular lower end edge 65 and rigidly fixed to the collar 45 at the top edge 35 of the glass-shaped body 15, and with a top part projecting towards the outside of the glass-shaped body 15 and at which the outlet hole 60 is made.

Preferably, the shape of the containment body 55 can be substantially axisymmetric (i.e. that of a solid of revolution), for example truncated-cone or rounded (cup), with an axis coincident with the axis of the glass-shaped body 15.

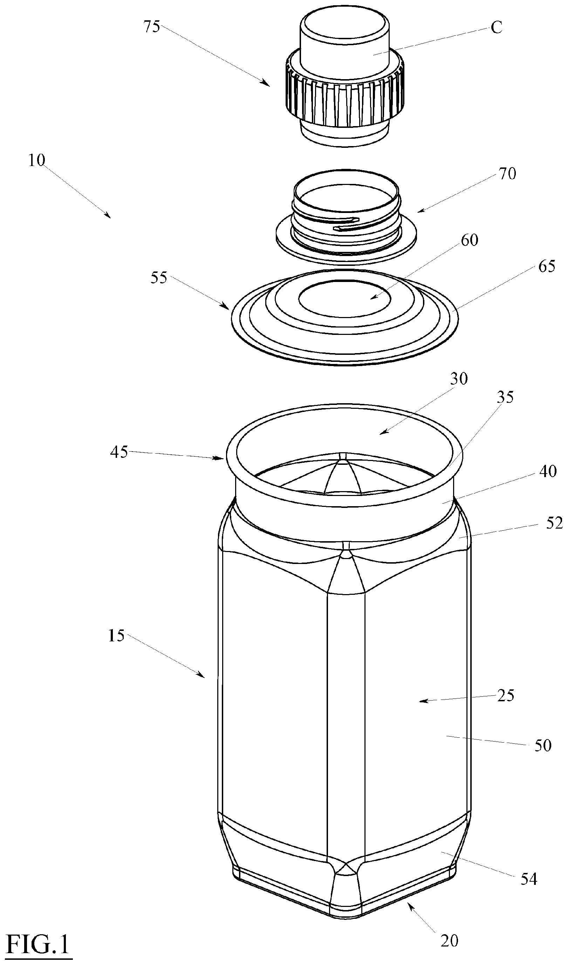

In some embodiments, the containment body can comprise a plane top portion (see for example Figure 1, 2 or 4), in which the outlet hole 60 is obtained, which can be circular and can be connected to the circular edge of lower end 65 through an intermediate and protruding annular portion, for example conical or rounded, which distances it axially with respect to the lower end edge 65 itself.

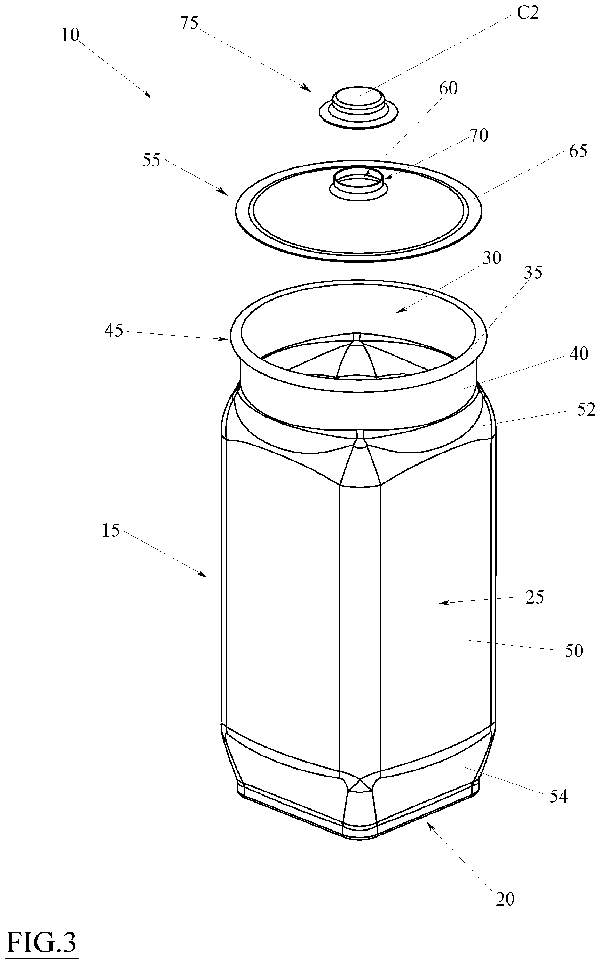

In other embodiments (see for example Figure 3), also the top portion of the containment body 55 can be rounded or in any case tapered at the outlet hole 60.

In any case, thanks to the concave shape, the containment body 55 is configured in such a way as to define a sort of funnel or bottle neck which makes available a variable passage section, preferably gradually variable, which narrows from the lower end edge 65 towards the top portion, so as to be able to effectively convey the product contained inside the container 10 towards the outlet hole 60.

More precisely, the containment body 55 can have a passage section (made with respect to a plane orthogonal to the axis of the glass-shaped body) which is maximum at the lower end edge 55 and smaller, for example minimum, at the outlet hole 60.

In some embodiments (see for example Figures 1, 3 and 4), the outlet hole 60 can be made precisely in the top portion of the containment body 55, i.e. in the portion of the containment body 55 which is the furthest from the glass-shaped body 15. Furthermore, the outlet hole 60 can be perfectly located in the centre of the containment body 65, i.e. aligned and coaxial with the axis of the glass-shaped body 15.

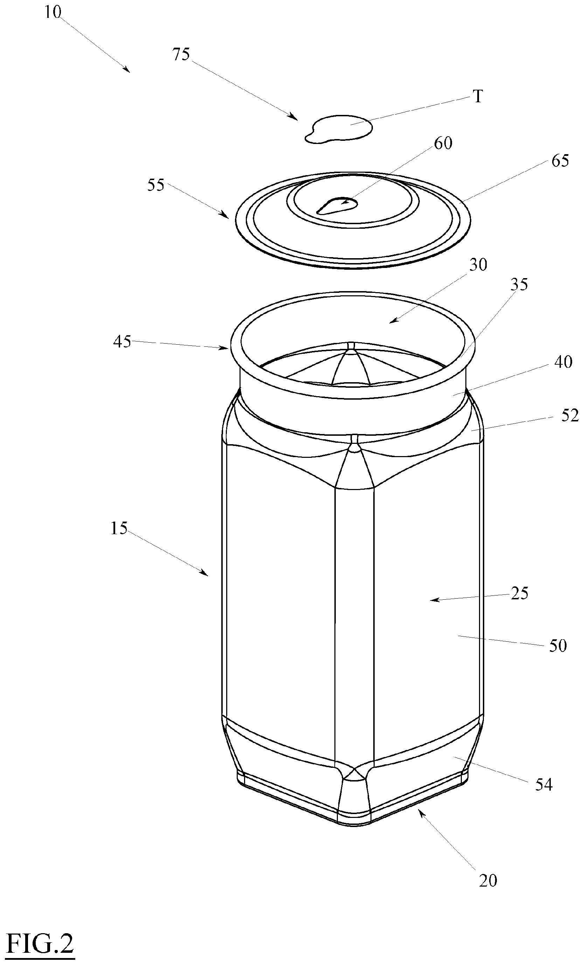

However, it is not excluded that, in other embodiments, the outlet hole 60 may be off-centered, i.e. offset with respect to the axis of the glass-shaped body (see for example Figure 2).

Nor is it excluded that the outlet hole 60 can be made in an intermediate portion of the containment body 55, for example in one of the surfaces protruding from the lower end edge 65 towards the top portion, as long as always at a certain axial distance from the top edge top 35 of the glass-shaped body 15.

As can be seen in the attached figures, the containment body 55 can be effectively made starting from a plane discoidal body, which can subsequently be plastically deformed, for example by means of a thermoforming, molding or drawing process, so as to give it the concave shape outlined above and make the lower circumferential perimeter edge 65 adapted to be superimposed and fixed to the top edge 35 of the glass-shaped body 15. In this regard, it should be noted that the shoulder made by means of the collar 45 also enables to make available a wide top edge 35 so as to provide an increased fixing surface for the lower edge 65 of the containment body 55.

The container 10 can further comprise a tightening element 75, which is adapted to removably close the outlet hole 60 of the containment body 55.

The tightening element 75 can be of the temporarily removable type, that is, it can be removed for dispensing the product and subsequently repositioned to close the outlet hole 60, or, alternatively, it can be of the permanently removable type.

In particular, the tightening element 75 can be associated with the outlet hole 60 of the containment body 55 directly or indirectly as will be better explained below.

Particularly, in an embodiment of the container 10 illustrated in Figure 2, the tightening element 75 is directly associated with the outlet hole 60 of the containment body 55.

In this embodiment, the tightening element 75 comprises an at least partially removable tab T, i.e. provided with at least a removable or completely removable portion.

The tab T is welded, or possibly glued, to the containment body 55 so as to close, preferably in a leak-proof manner, the outlet hole 60 thereof.

In this embodiment the tightening element 75 is made of a plastic material, preferably bioplastic, based on paper or made of aluminum.

In an alternative embodiment of the container 10, of which three different versions are shown in Figures 1, 3 and 4, the tightening element 75 is associated with the outlet hole 60 of the containment body 55 indirectly.

Particularly, in this alternative embodiment, the container 10 can further comprise a dispensing spout 70, substantially tubular in shape (e.g. cylindrical), which is associated with the outlet hole 60 of the containment body 55 so as to substantially create an extension thereof.

In other words, the dispensing spout 70 can be arranged coaxial to the outlet hole 60 and can concur with the containment body 55 to define the funnel structure which allows the controlled dispensing of the product contained inside the glass-shaped body 15.

The tightening element 75 is therefore removably associated with the dispensing spout 70, and therefore indirectly with the outlet hole 60, so as to completely occlude it.

In the first version illustrated in Figure 1, the dispensing spout 70 is made in a separate and distinct body and is rigidly fixed to the containment body 55, for example welded or glued, at the outlet hole 60 thereof.

More precisely, in this case, the dispensing spout 70 is fixed to the containment body 55 so that the outlet hole 60 is completely surrounded by the dispensing spout 70 itself, i.e. reachable only through said dispensing spout 70.

In said first version the dispensing spout 70 is made of plastic material, preferably bioplastic.

The tightening element 75 may comprise a screwable/unscrewable cap C on the dispensing spout 70.

For this purpose, the dispensing spout 70 can have an external threading that allows the coupling with the corresponding internal threading of the cap C, i.e. of the tightening element 75.

Furthermore, said screwable/unscrewable cap C can preferably comprise a fitting portion adapted to be inserted substantially to size into the dispensing spout 70 of the containment body 55.

In this way, a hermetic closure allowing to minimize air infiltration can be obtained which otherwise might cause a premature degradation of the product contained in the glass-shaped body 15.

In said first variant, the screwable cap C, or the tightening element 75, is made of a plastic material, preferably bioplastic.

In the second version illustrated in Figure 3, the dispensing spout 70 is made as one piece (i.e.as a single and integral body) with the containment body 55.

The dispensing spout 70 is therefore made of the same material with which the glass-shaped body 15 and the containment body 55 are made, that is, it is made of a paper-based material, for example a composite material based on paper fibres, preferably in a laminated material comprising polythene and paper fibres.

The tightening element 75 can comprise a cap C2 adapted to define a shape coupling with the dispensing spout 70, so as to completely occlude the outlet hole 60.

In particular, the cap C2 is adapted to be inserted to size on the dispensing spout 70 so as to occlude it at the top and completely surround it in the perimeter direction.

In said second variant, the cap C2, that is the tightening element 75, can be made of a paper-based material, for example a composite material based on paper fibres, preferably of a laminated material comprising polythene and paper fibres.

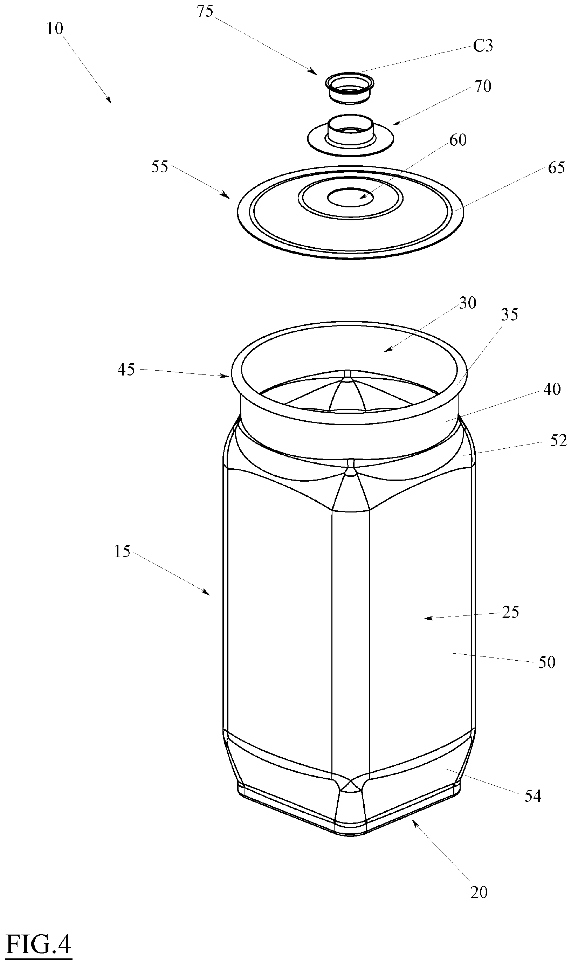

In the third variant visible in Figure 4, the dispensing spout 70, like in the first variant, is made in a separate and distinct body which is rigidly fixed to the containment body 55, for example welded or glued, at the outlet hole 60 .

More precisely, the dispensing spout 70 is fixed to the containment body 55 so as to completely surround the outlet hole 60, which is therefore reachable only through the dispensing spout 70 itself.

In said third variant, differently from the first variant, the dispensing spout 70 is made of a paper-based material, for example it can be made of a composite material based on paper fibres, preferably of a laminated material comprising polythene and fibres paper.

The tightening element 75 can comprise a cap C3 adapted to define a shape coupling with the dispensing spout 70, so as to completely occlude the outlet hole 60 of the containment body.

Particularly, the cap C3 can have a first portion adapted to be inserted to size into the dispensing spout 70, and a second portion which is derived in a cantilever manner from the first one and is adapted to be placed in abutment on an upper edge of the dispensing spout 70 itself.

In said third variant, the cap C3, i.e. the tightening element 75, is made of a paper-based material, for example a composite material based on paper fibres, preferably of a laminated material comprising polythene and paper fibres.

Obviously, in addition to the various embodiments shown here, any other variant of the tightening element 75 however suitable for the purpose of closing the outlet hole 60 in a removable manner falls within the scope of the present invention.

Furthermore, all the embodiments of the tightening element 75 are adaptable in a trivial way to any of the variants described above.

As can be seen from the present description, the container 10 according to the invention can be made in all its parts (glass-shaped body 15, containment body 55, dispensing spout 70, tightening element 75) of materials with a low environmental impact, or of recyclable and/or biodegradable and/or compostable materials.

In practice, the materials used, as well as the contingent shapes and sizes, can be whatever according to the requirements without for this reason departing from the scope of protection of the following claims.

## Claims

1. A container (10) for packaging a product, comprising:
- a glass-shaped body (15) made of a paper-based material and defining an accommodation volume inside which the product is adapted to be contained, and
- a containment body (55) made of paper-based material,
wherein said glass-shaped body (15) is closed at the bottom by a bottom wall (20), it is delimited on the perimeter by a side wall (25) defining all the side faces of the glass-shaped body (15), and it is provided with a circular upper opening (30) delimited by a circular top edge (35),
wherein the side wall (25) of the glass-shaped body (15) includes a cylindrical portion (40) defining the circular upper opening (30) and the circular top edge (35),
wherein the side wall (25) of the glass-shaped portion (15) includes also a prismatic shaped portion (50),
wherein the prismatic portion (50) has a greater transverse extension than the bottom wall (20)
wherein said containment body (55) is fixed at the top edge (35) of the glass-shaped body (15) and has an outlet hole (60) for the product,
wherein said containment body (55) has a concave shape having concavity directed towards the accommodation volume of the glass-shaped body (15) and tapered from the top edge (35) of the glass-shaped body (15) towards the outlet hole (60), **characterized in that** the prismatic portion has the shape of a right prism coaxial with the cylindrical portion (40) and the upper opening (30) and wherein the prismatic portion has a greater transverse extension than the cylindrical portion.

2. The container (10) according to claim 1, wherein said containment body (55) has an axisymmetric shape, for example truncated-cone or rounded.

3. The container (10) according to claim 1, further comprising a collar (45) which defines the upper opening of the glass-shaped body (15) and which makes available the top edge (35) thereof.

4. The container (10) according to claim 3, wherein the collar (45) is obtained by means of folding an upper strip of the glass-shaped body (15) on itself.

5. The container (10) according to claim 3, wherein the collar (45) is made as a separate body of plastic material fixed to the glass-shaped body (15).

6. The container (10) according to claim 1, wherein the glass-shaped body (15) and the containment body (55) are made of a paper and polythene-based laminated composite material.

7. The container (10) according to claim 1, further comprising a tab (T) welded to the containment body (55) so as to close the outlet hole (60), which is provided with at least a removable portion for opening the outlet hole (60) thereof.

8. The container (10) according to claim 1, comprising a dispensing spout (70) associated to the outlet hole (60).

9. The container (10) according to claim 8, comprising a removable cap (C, C2, C3) adapted to couple with said dispensing spout (70) for closing the outlet hole (60).

## Patentansprüche

1. Behälter (10) zum Verpacken eines Produkts, umfassend:
- einen becherförmigen Körper (15), der aus einem papierbasierten Material gefertigt ist und ein Aufnahmevolumen definiert, für das das Produkt angepasst ist, um darin enthalten zu sein, und
- einen Einschlusskörper (55), der aus papierbasiertem Material gefertigt ist,
wobei der becherförmige Körper (15) unten durch eine Bodenwand (20) geschlossen ist, am Umfang durch eine Seitenwand (25) begrenzt ist, die alle Seitenflächen des becherförmigen Körpers (15) definiert, und wobei er mit einer kreisförmigen oberen Öffnung (30) versehen ist, die durch einen kreisförmigen oberen Rand (35) begrenzt ist, wobei die Seitenwand (25) des becherförmigen Körpers (15) einen zylindrischen Abschnitt (40) beinhaltet, der die kreisförmige obere Öffnung (30) und den kreisförmigen oberen Rand (35) definiert,
wobei die Seitenwand (25) des becherförmigen Abschnitts (15) auch einen prismenförmigen Abschnitt (50) beinhaltet,
wobei der prismatische Abschnitt (50) eine größere Quererstreckung als die Bodenwand (20) aufweist,
wobei der Einschlusskörper (55) an dem oberen Rand (35) des becherförmigen Körpers (15) befestigt ist und einen Auslassloch (60) für das Produkt aufweist,
wobei der Einschlusskörper (55) eine konkave Form aufweist, die eine Konkavität aufweist, die zu dem Aufnahmevolumen des becherförmigen Körpers (15) gerichtet ist und sich von dem oberen Rand (35) des becherförmigen Körpers (15) zu dem Auslassloch (60) hin verjüngt, **dadurch gekennzeichnet, dass** der prismatische Abschnitt die Form eines rechten Prismas koaxial zu dem zylindrischen Abschnitt (40) und der oberen Öffnung (30) aufweist und wobei der prismatische Abschnitt eine größere Quererstreckung als der zylindrische Abschnitt aufweist.

2. Behälter (10) nach Anspruch 1, wobei der Einschlusskörper (55) eine achsensymmetrische Form aufweist, beispielsweise kegelstumpfförmig oder abgerundet.

3. Behälter (10) nach Anspruch 1, ferner umfassend einen Bund (45), der die obere Öffnung des becherförmigen Körpers (15) definiert und dessen oberen Rand (35) zugänglich macht.

4. Behälter (10) nach Anspruch 3, wobei der Bund (45) durch Falten eines oberen Streifens des becherförmigen Körpers (15) auf sich selbst erlangt wird.

5. Behälter (10) nach Anspruch 3, wobei der Bund (45) als separater Körper aus Kunststoffmaterial gefertigt ist, der an dem becherförmigen Körper (15) befestigt ist.

6. Behälter (10) nach Anspruch 1, wobei der becherförmige Körper (15) und der Einschlusskörper (55) aus einem laminierten Verbundmaterial auf Papier- und Polyethylenbasis gefertigt sind.

7. Behälter (10) nach Anspruch 1, ferner umfassend eine Lasche (T), die an den Einschlusskörper (55) geschweißt ist, um das Auslassloch (60) zu schließen, und die mit mindestens einem abnehmbaren Abschnitt zum Öffnen des Auslasslochs (60) versehen ist.

8. Behälter (10) nach Anspruch 1, umfassend einen Ausgießer (70), der mit dem Auslassloch (60) assoziiert ist.

9. Behälter (10) nach Anspruch 8, umfassend eine abnehmbare Kappe (C, C2, C3), die angepasst ist, um mit dem Ausgießer (70) zu koppeln, um das Auslassloch (60) zu schließen.

## Revendications

1. Récipient (10) de conditionnement d'un produit, comprenant:
- un corps en forme de verre (15) fait d'un matériau à base de papier et ayant la forme d'un volume d'accueil à l'intérieur duquel le produit est destiné à être contenu, et
- un corps de confinement (55) fait en matériau à base de papier,
dans lequel ledit corps en forme de verre (15) est fermé en bas par une paroi inférieure (20). Il est délimité au niveau du périmètre par une paroi latérale (25) qui délimité toutes les faces latérales du corps en forme de verre (15), et il est pourvu d'une ouverture supérieure circulaire (30) délimitée par un bord supérieur circulaire (35),
dans lequel la paroi latérale (25) du corps en forme de verre (15) comprend une partie cylindrique (40) qui délimite l'ouverture supérieure circulaire (30) et le bord supérieur circulaire (35),
dans lequel la paroi latérale (25) de la partie en forme de verre (15) comprend également une partie en forme de prisme (50),
dans lequel la partie en forme de prisme (50) a une extension transversale plus importante que la paroi inférieure (20),
dans lequel ledit corps de confinement (55) est fixé au bord supérieur (35) du corps en forme de verre (15) et comporte un orifice de sortie (60) du produit,
dans lequel ledit corps de confinement (55) a une forme concave avec une concavité dirigée vers le volume de logement du corps en forme de verre (15) et effilée à partir du bord supérieur (35) du corps en forme de verre (15) vers l'orifice de sortie (60), **caractérisé en ce que** la partie en forme de prisme a la forme d'un prisme droit coaxial avec la partie cylindrique (40) et l'ouverture supérieure (30) et dans lequel la partie en forme de prisme a une plus grande extension transversale que la partie cylindrique.

2. Récipient (10) selon la revendication 1, dans lequel ledit corps de confinement (55) a une forme axisymétrique, par exemple tronconique ou arrondie.

3. Récipient (10) selon la revendication 1, comprenant en outre un col (45) définissant l'ouverture supérieure du corps en forme de verre (15) et rendant disponible le bord supérieur (35) de celui-ci.

4. Récipient (10) selon la revendication 3, dans lequel le col (45) est obtenu par pliage d'une bande supérieure du corps en forme de verre (15) sur lui-même.

5. Récipient (10) selon la revendication 3, dans lequel le col (45) est un corps séparé en matière plastique fixé au corps en forme de verre (15).

6. Récipient (10) selon la revendication 1, dans lequel le corps en forme de verre (15) et le corps de confinement (55) sont constitués d'un matériau composite stratifié à base de papier et de polyéthylène.

7. Récipient (10) selon la revendication 1, comprenant en outre une languette (T) soudée au corps de confinement (55) de manière à fermer l'orifice de sortie (60), qui est pourvue d'au moins une partie amovible permettant d'ouvrir l'orifice de sortie (60).

8. Récipient (10) selon la revendication 1, comprenant un bec de distribution (70) associé à l'orifice de sortie (60).

9. Récipient (10) selon la revendication 8, comprenant un bouchon amovible (C, C2, C3) adapté pour fonctionner avec ledit bec de distribution (70) afin de fermer l'orifice de sortie (60).
